# FASCICULE DE BREVET EUROPEEN

(11) **EP 2 073 297 B1**
(45) Date de publication et mention de la délivrance du brevet: **18.08.2010**
(21) Numéro de dépôt: 08354083.1
(22) Date de dépôt: 13.11.2008
(51) Int. Cl.: H01M 8/04

(54) **Procédé d'utilisation d'une pile à combustible comportant une étape de régénération par abaissement de la température**
Anwendungsverfahren einer Brennstoffzelle, das eine Regenerierungsphase durch Temperaturabsenkung umfasst
Method of using a fuel cell comprising a step of regeneration by lowering the temperature

(30) Priorité: 18.12.2007 FR 0708829
(43) Date de publication de la demande: 24.06.2009
(73) Titulaire: Commissariat à l'Énergie Atomique et aux Énergies Alternatives, 75015 Paris (FR)
(72) Inventeur: Guillet, Nicolas, 26300 Chatuzange le Goubet (FR)
(74) Mandataire: Hecké, Gérard

(56) Documents cités:
- WO-A-2007/088471
- DE-A1- 10 328 257
- US-B1- 6 524 733

## Description

### Domaine technique de l'invention

L'invention est relative à un procédé d'utilisation d'une pile à combustible, comportant au moins une étape de régénération des performances de la pile.

### État de la technique

Les piles à combustible sont des systèmes électrochimiques qui permettent de convertir une énergie chimique en électricité. Pour les piles à combustible à membrane échangeuse de protons (« Proton Exchange Membrane Fuel Cell »), l'énergie chimique se présente sous la forme d'hydrogène gazeux. La pile à combustible se décompose alors en deux compartiments (l'un alimenté en hydrogène et l'autre alimenté en oxygène) séparés par une membrane échangeuse de protons. A l'anode, les protons provenant de la réaction d'oxydation de l'hydrogène traversent la membrane tandis que les électrons doivent passer dans un circuit électrique externe pour atteindre la cathode où se produit la réaction de réduction de l'oxygène.

Ainsi, sous réserve d'alimenter la pile en hydrogène et en oxygène, il est possible d'obtenir un courant électrique directement proportionnel à la quantité de gaz consommé.

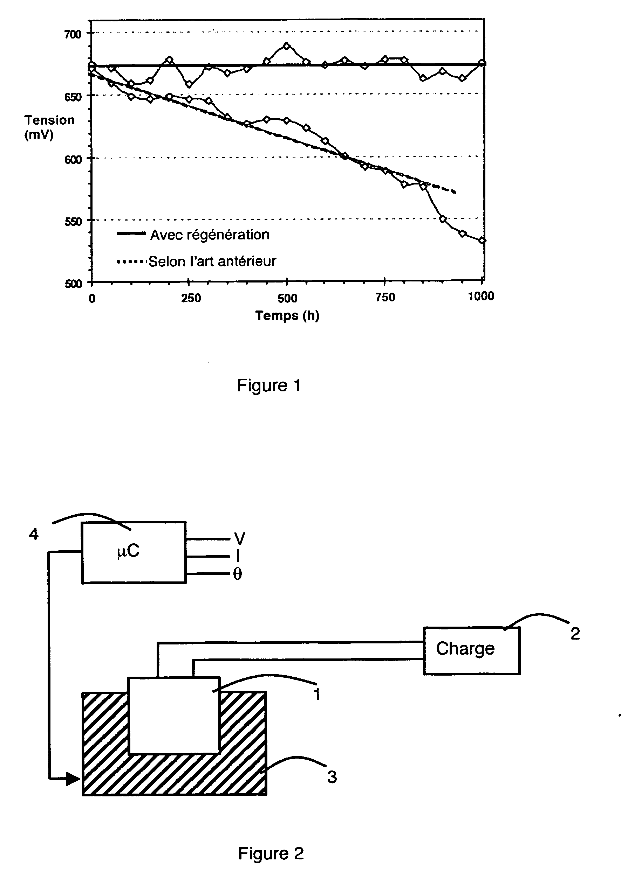

Cependant, au cours de leur fonctionnement, les performances des piles à combustible diminuent lentement et d'une manière constante sur plusieurs centaines d'heures. Cette diminution est de l'ordre de 30 à 150µV/h pour un courant fixé sur une durée, par exemple, de 1500 heures. La diminution de la tension aux bornes de la pile à combustible, illustrée par la courbe A de la figure 1, est représentative de cette perte de performance.

Cette diminution des performances est notamment liée à une mauvaise maîtrise de la gestion de l'eau dans une pile à combustible à membrane échangeuse de protons.

En effet, si la membrane s'assèche, sa résistance augmente et les performances de la pile vont décroître. Si un courant électrique important traverse la membrane, l'augmentation de la résistance de la membrane conduit à un échauffement par effet Joule, qui peut entraîner la dégradation du polymère de la membrane ou d'autres composants de la pile.

Inversement, si trop d'eau s'accumule dans la pile, les gaz ne peuvent plus accéder aux sites actifs qui sont le siège des réactions électrochimiques. Les performances de la pile diminuent alors en conséquence.

L'article de He et al « An Electrochemical Method to Improve the Performance of Air Cathodes and Methanol Anodes » Electrochemical and Solid-State Letters, 5 (8) A181-183 (2002), indique qu'une fois le compartiment cathodique de la pile à combustible purgé sous azote, l'application d'un courant constant entre les électrodes de la pile permet de régénérer ses performances. Avec cette méthode, la gestion de l'eau est optimisée en hydratant au maximum la membrane et en expulsant l'eau en surabondance.

Le document US6524733 décrit un procédé de régénération d'une pile à combustible à membrane polymère, le procédé comportant un abaissement de la température à l'aide d'un circuit de refroidissement provoquant une augmentation de la pression de la vapeur d'eau. Ceci améliore l'hydratation de la membrane polymère et rétablit la performance du système. La durée du procédé de régénération ne semble pas être prédéfinie.

Cependant, bien que l'alimentation en courant ou l'arrêt de la pile permette de maintenir des performances élevées de la pile, ces options sont inenvisageables pour des applications industrielles.

### Objet de l'invention

L'invention a pour objet un procédé d'utilisation de la pile qui soit facile à mettre en oeuvre et qui permette de maintenir des performances élevées pendant toute la durée de vie de la pile.

Le procédé selon l'invention est caractérisé par les revendications annexées et plus particulièrement par le fait que l'étape de régénération comporte, pendant une durée prédéfinie, un abaissement de la température de la pile à combustible en dessous d'une température nominale de fonctionnement, une charge restant alimentée par la pile pendant la durée d'abaissement de la température

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 représente l'évolution de la tension aux bornes d'une pile à combustible respectivement selon l'art antérieur (courbe A) et selon l'invention (courbe B),
- la figure 2 représente un schéma de montage d'une pile à combustible,
- la figure 3 illustre, schématiquement, l'évolution de la tension aux bornes de la pile suivant le procédé d'utilisation selon l'invention.

### Description d'un mode de réalisation préférentiel de l'invention

Afin que la pile à combustible conserve des performances optimales, au moins une étape de régénération est prévue pendant l'utilisation de la pile à combustible 1. Cette étape de régénération consiste à abaisser temporairement la température de la pile à combustible 1 sous sa température nominale de fonctionnement. Cette étape de régénération est réalisée sans modifier les autres paramètres de fonctionnement de la pile (température nominale de fonctionnement, densité de courant, débit, pression, humidification des gaz réactifs...). De plus, l'utilisation de la pile à combustible n'est pas interrompue et l'alimentation d'une charge électrique 2 (sur la figure 2) par la pile est maintenue durant l'étape de régénération. Une fois l'étape de régénération terminée, la température de la pile à combustible est ramenée à sa valeur nominale. A titre d'exemple, comme illustré à la figure 2, un circuit de contrôle 4 est connecté à un système de refroidissement 3 de la pile.

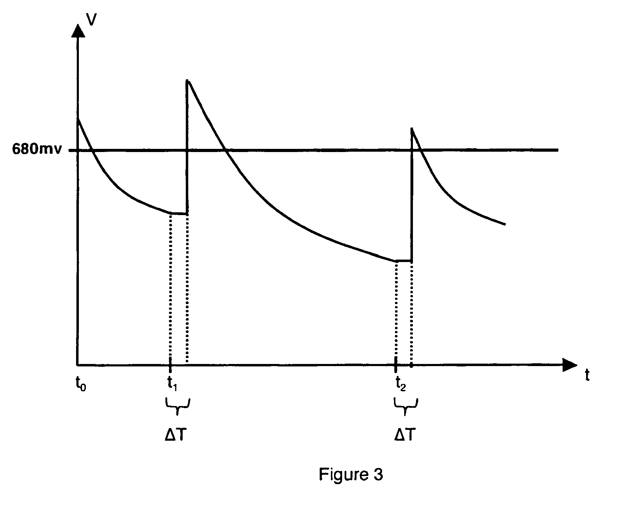

A titre d'exemple, la figure 3 illustre l'influence sur la tension de la pile d'une étape de régénération par refroidissement temporaire de la pile, par exemple une durée de 4h. A partir d'un instant t₀ et au fur et à mesure de son utilisation, les performances de la pile à combustible décroissent, ce qui se traduit, à courant constant, par une diminution de la tension aux bornes de la pile 1 au-dessous de sa tension nominale (680mV) dans l'exemple représenté. De manière schématique, la dégradation se décompose en une chute rapide de la tension suivie d'une baisse régulière en fonction du temps de fonctionnement. Entre les instants t₀ et t₁, la température nominale de fonctionnement de la pile est, par exemple, de 70°C. A un instant t₁, le circuit de contrôle 4 déclenche une étape de refroidissement de la pile au moyen du système de refroidissement 3, pendant une durée Δ de 4h. La température de la pile 1 est abaissée en dessous de sa température nominale de fonctionnement, par exemple à 30°C, à l'instant t₁. Après cet abaissement temporaire de la température, le retour à la température nominale provoque une augmentation rapide de la tension aux bornes de la pile 1, correspondant à une augmentation de ses performances.

Dans l'exemple illustré, entre les instants t₁ et t₂, les performances de la pile à combustible 1 décroissent de nouveau et de façon plus importante qu'entre les instants t₀ et t₁. En effet, La durée entre t₁ et t₂ étant supérieure à celle entre t₀ et t₁, la tension à l'instant t₂ est plus basse qu'à l'instant t₁. A l'instant t₂, la température de la pile est abaissée, temporairement, par exemple à 50°C. Ceci entraîne, de nouveau, une augmentation de la tension aux bornes de la pile à combustible au-dessus de sa tension nominale de fonctionnement.

En utilisant de façon répétée cette étape de régénération, la tension aux bornes de la pile à combustible peut être maintenue sensiblement constante sur de très longues durées d'utilisation (1000h de fonctionnement), comme illustré par la courbe B de la figure 1.

L'étape de régénération est avantageusement réalisée périodiquement, avec une période comprise, de préférence, entre quelques heures et plusieurs centaines d'heures, par exemple entre 20h et 500h. Cependant, l'abaissement de la température peut également être réalisé lorsque la puissance électrique demandée à la pile diminue, que ce soit de façon ponctuelle ou périodique. Ainsi, une diminution naturelle de la puissance thermique produite par la pile est mise à profit pour réaliser à ce moment là, un abaissement supplémentaire de la température de la pile ce qui permet de régénérer la pile à combustible en dehors des périodes de forte utilisation. Il est alors possible de déclencher l'abaissement de la température de la pile si sa température de fonctionnement passe sous un certain seuil. L'abaissement de la température de la pile peut également avoir lieu si les performances de la pile à combustible 1 sont mesurées inférieures à un seuil prédéterminé, par exemple si la tension aux bornes de la pile, significative d'une chute des performances, est inférieure à un seuil. Les critères retenus pour le déclenchement d'une étape de régénération (périodicité fixe, tension ou température) sont utilisés par le circuit de contrôle 4 qui recueille diverses grandeurs caractéristiques du fonctionnement de la pile à combustible 1 (V, I, température...). Le circuit de contrôle 4 peut alors, par exemple, en fonction de la température de la pile à combustible et/ou de la tension à ses bornes, contrôler le fonctionnement et plus particulièrement la puissance du système de refroidissement 3. Le circuit de contrôle 4 peut utiliser d'autres paramètres de la pile 1 pour déclencher l'étape de régénération ou déclencher une telle étape à intervalle régulier. Dans ce cas, le circuit de contrôle 4 comporte une horloge.

La température nominale de fonctionnement d'une pile à combustible est généralement comprise entre la température ambiante et environ 120°C. L'abaissement de la température de la pile à combustible est avantageusement compris, entre 10% et 60% de sa température nominale de fonctionnement, exprimée en °C. A titre d'exemple, pour une pile à combustible qui a une température nominale de fonctionnement de l'ordre de 70°C, la température de régénération est comprise entre 30°C et 60°C. Bien que la température puisse être abaissée jusqu'à 20°C, un abaissement à 50°C serait en pratique suffisant.

La durée de l'étape de régénération doit être suffisante pour que la température de la pile se stabilise et soit homogène, la durée est donc variable suivant la taille de la pile. La durée de régénération est, de préférence, comprise entre une dizaine de minutes et plusieurs heures, par exemple entre dix minutes et douze heures.

## Revendications

1. Procédé d'utilisation d'une pile à combustible (1), comportant au moins une étape de régénération des performances de la pile (1), procédé **caractérisé en ce que** l'étape de régénération comporte, pendant une durée prédéfinie, un abaissement de la température de la pile à combustible (1) en dessous d'une température nominale de fonctionnement, une charge électrique restant alimentée par la pile (1) pendant la durée d'abaissement de la température.

2. Procédé selon la revendication 1, **caractérisé en ce que** l'abaissement de la température est compris entre 10% et 60% de sa température nominale de fonctionnement en °C.

3. Procédé selon l'une des revendications 1 et 2, **caractérisé en ce que** l'étape de régénération est répétée périodiquement.

4. Procédé selon la revendication 3, **caractérisé en ce que** l'étape de régénération est répétée avec une période comprise entre quelques heures et quelques centaines d'heures.

5. Procédé selon l'une quelconque des revendications 1 à 4, **caractérisé en ce que** l'étape de régénération est réalisée lorsqu'une tension aux bornes de la batterie est inférieure à un seuil prédéterminé.

6. Procédé selon l'une quelconque des revendications 1 à 5, **caractérisé en ce que** l'étape de régénération est réalisée lorsque la température de la pile à combustible (1) est inférieure à un seuil prédéterminé.

7. Procédé selon l'une quelconque des revendications 1 à 6, **caractérisé en ce que** la durée de l'étape de régénération est comprise entre 10 minutes et 12 heures.

## Claims

1. A method for using a fuel cell (1), comprising at least one regeneration step of the performances of the cell (1), method **characterized in that** the regeneration step comprises lowering of the temperature of the fuel cell (1) below a nominal operating temperature for a predefined time, an electric load remaining supplied by the cell (1) during lowering of the temperature.

2. The method according to claim 1, **characterized in that** lowering of the temperature is comprised between 10% and 60% of its nominal operating temperature in °C.

3. The method according to one of claims 1 and 2, **characterized in that** the regeneration step is repeated periodically.

4. The method according to claim 3, **characterized in that** the regeneration step is repeated with a period comprised between a few hours and several hundred hours.

5. The method according to any one of claims 1 to 4, **characterized in that** the regeneration step is performed when a voltage at the battery terminals is lower than a preset threshold.

6. The method according to any one of claims 1 to 5, **characterized in that** the regeneration step is performed when the temperature of the fuel cell (1) is lower than a preset threshold.

7. The method according to any one of claims 1 to 6, **characterized in that** the duration of the regeneration step is comprised between 10 minutes and 12 hours.

## Patentansprüche

1. Verfahren zur Verwendung einer Brennstoffzelle (1), das mindestens eine Regenerationsphase für die Leistung der Brennstoffzelle (1) umfasst, Verfahren, das **dadurch gekennzeichnet ist, dass** die Regenerationsphase während einer vorbestimmten Dauer ein Absenken der Temperatur der Brennstoffzelle (1) unter eine nominale Betriebstemperatur umfasst, wobei während des Absenkens der Temperatur eine elektrische Ladung durch die Brennstoffzelle (1) versorgt bleibt.

2. Verfahren nach Anspruch 1, **dadurch gekennzeichnet, dass** das Absenken der Temperatur 10 bis 60 % ihrer nominalen Betriebstemperatur in Grad Celsius beträgt.

3. Verfahren nach einem der Ansprüche 1 und 2, **dadurch gekennzeichnet, dass** die Regenerationsphase regelmäßig wiederholt wird.

4. Verfahren nach Anspruch 3, **dadurch gekennzeichnet, dass** die Regenerationsphase in einem zeitlichen Abstand von einigen Stunden bis zu einigen hundert Stunden wiederholt wird.

5. Verfahren nach einem der Ansprüche 1 bis 4, **dadurch gekennzeichnet, dass** die Regenerationsphase durchgeführt wird, wenn eine Spannung an den Klemmen der Batterie unter einem vorbestimmten Schwellenwert liegt.

6. Verfahren nach einem der Ansprüche 1 bis 5, **dadurch gekennzeichnet, dass** die Regenerationsphase durchgeführt wird, wenn die Temperatur der Brennstoffzelle (1) unter einem vorbestimmten Schwellenwert liegt.

7. Verfahren nach einem der Ansprüche 1 bis 6, **dadurch gekennzeichnet, dass** die Dauer der Regenerationsphase 10 Minuten bis 12 Stunden beträgt.
